# EUROPEAN PATENT APPLICATION

(11) **EP 4 574 313 A1**
(43) Date of publication of application: **25.06.2025**
(21) Application number: 23219277.3
(22) Date of filing: 21.12.2023
(51) Int. Cl.: B22F 10/366, B22F 10/28, B22F 12/90, B29C 64/153, B29C 64/393, B33Y 10/00, B33Y 30/00, B33Y 50/02

(54) **METHOD TO OPERATE AN ADDITIVE MANUFACTURING SYSTEM, ADDITIVE MANUFACTURING SYSTEM, CONTROL DEVICE, COMPUTER PROGRAM AND STORAGE MEDIUM**

(71) Applicant: Siemens Aktiengesellschaft, 80333 München (DE)
(72) Inventor: Heinrichsdorff, Frank, 14513 Teltow (DE); Kastsian, Darya, 14612 Falkensee (DE); Reznik, Daniel, 13503 Berlin (DE); Theile, Oliver, 13437 Berlin (DE)
(74) Representative: Siemens Patent Attorneys

(57) **Abstract**

The invention relates to a method to operate an additive manufacturing system (1), comprising a control device (2), comprising the following steps performed by a control unit (3) of the control device (2) of: reading a sequence of commands comprising commands to be provided to the additive manufacturing device for melting powder along a sequence of exposure spots within a layer (5) of the workpiece (6);
- sequentially providing the commands of the command sequence (15) in control signals (7) at an output port (8) of the control device (2) connected to the additive manufacturing device; delaying the provision of a predefined command of the commands at the output port (8) with a respective predefined delay time as a function of one or more meltpool parameter values to set a respective delay between two adjacent of the exposure points (4).

## Description

The present invention relates to a method to operate an additive manufacturing system and a corresponding additive manufacturing system, furthermore the present invention relates to a corresponding control device. Additionally, the present invention relates to a respective computer program and a respective storage medium.

During a laser powder bed fusion procedure, a laser beam is focused on an exposure point of a highest layer to melt the powder. The melting generates a melt pool at the exposure point. A size of the melt pool may depend on a volume of solidified material of a workpiece around the exposure point. A provision of too much power by the beam at the exposure point may lead to overheating.

In laser powder bed fusion additive manufacturing the minimization of overheating issues leading to oversized melt-pools is mandatory for the generation of high quality parts and the reduction of process abortions. However, elaborate exposure strategy generation and process simulation tools can only consider systematic issues, so that critical stochastic process variations may remain un-addressed. In addition, neither empirically selected process parameters nor simulation-derived predictions can exclude systematic issues for sophisticated print jobs.

Currently available build-preparation software addresses the issue of potential overheating e.g. in overhang regions by an option to use different build parameters with reduced laser power and hatch distance. A user has to find appropriate settings empirically.

To address the overheating originating from the combination of low amount of local solidified mass and short laser recurrence time, a method disclosed in EP3671489A1 introduces delays between exposure vectors to allow for adequate cooling in critical regions.

It is an object of the present invention to provide a solution to avoid overheating during a laser powder bed fusion procedure.

This objective is achieved by the respective subject matter of the independent claims. Further implementations and preferred embodiments are subject matter of the dependent claims.

A first aspect of the present invention is related to a method to operate an additive manufacturing system. The additive manufacturing system may be designed as a laser powder bed fusion device. The additive manufacturing system comprises a control device. The control device comprises a control unit, configured to control the additive manufacturing system.

The method comprises the following steps performed by the control unit of the control device.

A first step of the method comprises a reading of a sequence of commands comprising commands to be provided to the additive manufacturing device for melting powder along a sequence of exposure points within a layer of the workpiece. In other words, the work piece is to be manufactured by the additive manufacturing system. The manufacturing of the workpiece requires steps to be performed by the additive manufacturing device, described in the sequence of commands. The control unit is configured to control the additive manufacturing device according to the commands of the sequence of commands. For producing the workpiece, powder is melt along the sequence of exposure points within the layer of the workpiece.

To produce the workpiece, the control device sequentially provides the commands of the sequence of commands in control signals at an output port of the control device, which is connected, to the additive manufacturing device. In other words, the additive manufacturing device is controlled by the provision of control signals by the control unit at the output port. In other words, the commands are provided through the control signals sent to the additive manufacturing device.

The method comprises a receiving of input signals at an input port of the control device. The input signals comprise a melt pool parameter value of a respective exposure spot, sensed by a sensor device of the additive manufacturing device. In other words, the additive manufacturing device comprises the sensor device that is configured to determine the melt pool parameter value describing the melt pool, generated at the respective exposure point. The melt pool parameter value may describe a wavelength or a temperature measured at the respective exposure point.

The melt pool parameter value allows a determination, whether overheating has occurred at the respective exposure point.

The sensor device provides the melt pool parameter value of the respective melt pool to the control unit in the input signal.

The method comprises the step of delaying the provision of the predefined command of the commands at the output port with the respective predefined delay time as a function of one or more of the melt pool parameter values to set the respective delay between two adjacent of the exposure points.

In other words the transmission of the control signals is delayed by delaying the transmission of one of the control signals with the predefined delay time. The delaying of the provision of the control signal is performed by the control unit depending on the respective melt pool parameter value of one or more of the input signals. In other words, the delaying is performed when one of the melt pool parameter values or more than one of the melt pool parameter values fulfil a predefined condition. As an example, the delay may be introduced after one of the exposure points if an average of a predefined number of melt pool parameter values fulfils the predefined condition. The delay may be introduced by delaying one of the control signals comprising a command to move the laser beam to one of the exposure points. The predefined condition may comprise an exceeding of a threshold value, like a threshold temperature.

The invention has the advantage that a provision of power at an exposure point may be adapted by introducing a pause. Therefore, it is not necessary to change exposure parameters of the laser that may influence the quality of the workpiece.

According to a further embodiment of the invention, the delay is set before a first exposure point of a respective exposure vector. In other words, the delay of the provision of at least one of the commands is performed between an exposure of a last exposure point of a preceding exposure vector and the exposure of the first exposure point of the following exposure vector. In other words, the delaying is set between two adjacent exposure vectors. The embodiment has the advantage that the exposure along exposure points of the exposure vector next to the preceding exposure vector may be delayed to allow a cooling of material around the exposure points of the preceding exposure vector. Therefore time to cool down may be prolonged to prevent a local overheating.

According to a further embodiment of the invention, the delay is set between adjacent exposure points within the same exposure vector. In other words, the delay of the provision of the command is performed between an exposure of a preceding exposure point and an exposure of a following exposure point of the same exposure vector. Therefore an overheating between exposure points of the same vector may be prevented.

According to a further embodiment of the invention, the respective delay is set in all exposure vectors of a selected vector group of adjacent exposure vectors. In other words, the layer may be distributed in respective groups, wherein each of the groups may comprise adjacent exposure vectors. The exposure vectors may be treated equally according to the at least one melt pool parameter value. The embodiment has the advantage that exposure points within a specific region of the layer prone to overheating may be treated equally, to achieve same properties within the region.

According to a further embodiment of the invention, the respective delay is set as a function of one or more melt pool parameter values of respective exposure points of the preceding exposure vector. In other words, the setting of the delay depends on one or more melt pool parameter values investigated for the respective exposure points of a preceding exposure vector of the exposure vector. It may be possible that the delay may depend on an average value of the melt pool parameter values of the preceding exposure vector. The embodiment has the advantage that the setting of the delay may depend on several melt pool parameter values of the neighbouring exposure vector. Therefore, extreme values of the exposure parameter values may be averaged out.

According to a further embodiment of the invention, the respective delay is set as a function of one or more melt pool parameter values of respective exposure points of a region of a preceding layer of a current layer. In other words, the delay is set depending on one or more melt pool parameter values measured for respective exposure points of the preceding layer. As an example, the control unit may record the melt pool parameter values of the preceding layer of the current layer. Depending on the melt pool parameter values within a specific region of the preceding layer, the control unit may set the delay between exposure points within a corresponding region in the current layer. The embodiment has the advantage, that an overheating in the current layer may be prevented by using the melt pool parameter values of a preceding layer.

For use cases or use situations which may arise in the methods and which are not explicitly described here, it may be provided that, in accordance with the methods, an error message and/or a prompt for user feedback is output and/or a default setting and/or a predetermined initial state is set.

A second aspect of the present invention is related to an additive manufacturing system. The additive manufacturing system is configured to manufacture a workpiece in an additive manufacturing procedure. The additive manufacturing system comprises a control device, comprising a control unit. The control device comprises an input port, configured to receive input signals from a sensor device of the additive manufacturing system. The control unit is configured to provide control signals to the additive manufacturing device at an output port of the control device. The control signals comprise commands, saved in a command sequence in the control device. The control unit is configured to provide the control signals at an output port of the control device.

The additive manufacturing system may be designed as a laser power bed fusion system.

A third aspect of the present invention relates to a control device. The control device is configured to perform a method according to the first aspect of the present invention. The control device comprises a control unit.

A fourth aspect of the invention is related to a computer program product comprising program code for performing a method according to the first aspect. The computer program product may also be regarded to a computer program.

A fifth aspect of the invention is related to a computer-readable storage medium comprising at least the computer program product according to the fourth aspect.

The control unit may comprise a computing unit. A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures
- FIG 1: shows a schematic illustration of an additive manufacturing system; and
- FIG 2: shows a schematic illustration of a method to operate an additive manufacturing system.

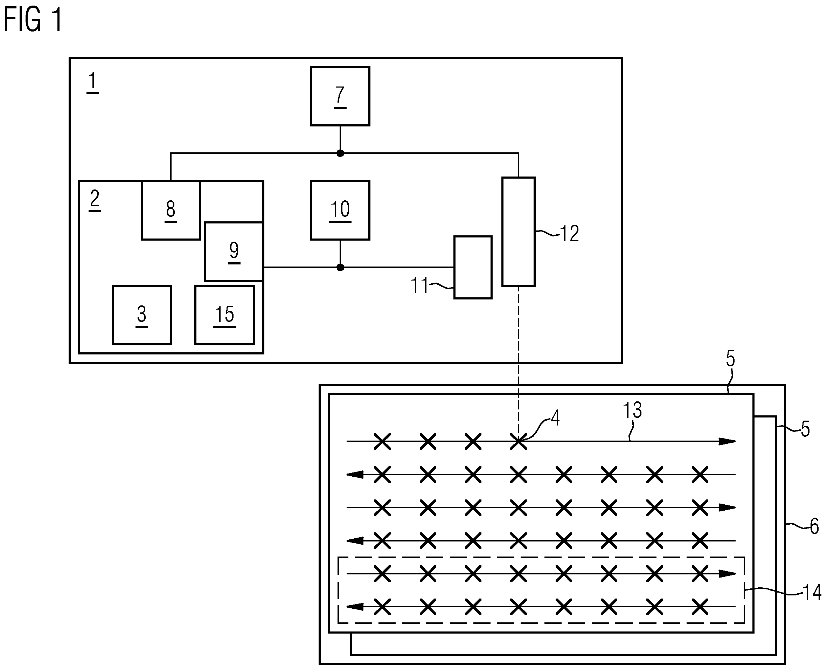

FIG 1 shows a schematic illustration of an additive manufacturing system 1.

The additive manufacturing system 1 may be designed as a laser powder bed fusion system. The additive manufacturing system 1 may be configured to manufacture a workpiece 6 in a layer 5 to layer 5 procedure. During a manufacturing of the respective layer 5 of the workpiece 6, the additive manufacturing system 1 may melt powder by means of a laser device 12 to solidify the powder. The laser device 12 may provide a laser beam to provide power at respective exposure points 4 along predefined exposure vectors 13. To guide the beam to the respective exposure points 4, a sequence of commands has to be executed by the additive manufacturing system 1. The sequence of commands may be stored in a control unit 3 of a control device 2 of the additive manufacturing system 1. The control unit 3 is configured to read the sequence of commands comprising the commands and to generate respective control signals 7, comprising the respective commands at an output port 8 of the control device 2 connected to the additive manufacturing system 1 The output port 8 may be connected to a scanner device of the additive manufacturing system 1 and the laser device 12. The additive manufacturing system 1 may comprise a sensor device 11 configured to measure a melt pool parameter value related to a respective melt pool generated at a respective exposure point 4 by the beam. The melt pool parameter value may comprise a temperature of the melt pool. The sensor device 11 may be configured to provide input signals 10 comprising the melt pool parameter values to an input port 9 of the control device 2.

If too much power is provided at an exposure point 4, an overheating may occur. A common way to prevent overheating is a reduction of the power provided by the beam by changing beam parameters. However a change of laser parameters may reduce the quality of the workpiece 6. To prevent overheating the control unit 3 is configured to receive the melt pool parameter values and to delay a provision of commands to the additive manufacturing system 1 as a function of the melt pool parameter values. The delaying of the transmission of commands may introduce a delay in the manufacturing procedure. The delay may allow the material to cool down. As an example the control unit 3 may be configured to analyse the respective melt pool parameter values of the exposure points 4 of a preceding vector. When the average of the melt pool parameter values satisfies a predefined condition, for example if the average is above a predefined threshold value, the control unit 3 may delay a transmission of one of the commands related to a first exposure point 4 of a current and exposure vector 13. Therefore, the exposure of the current exposure vector 13 is delayed. The material around the exposure points 4 of the preceding vector may cool down. Therefore, the provision of additional power at the exposure points 4 of the current exposure vector 13 may not cause overheating.

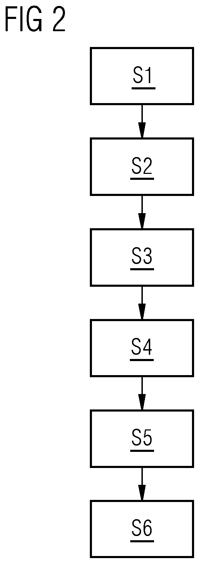

FIG 2 shows a schematic illustration of the method to operate an additive manufacturing system 1.

In a first step S1 of the method, the control device 2 of the additive manufacturing system 1 may receive a sequence of commands. The sequence of commands may be generated based on a model of the workpiece 6 to produce the workpiece 6 by the additive manufacturing system 1. The sequence of commands comprises the commands to be provided sequentially to the additive manufacturing device by the control unit 3 to produce the workpiece 6.

In a second step S2 the control unit 3 may provide the commands to the additive manufacturing system 1 at an output port 8 of the control device 2 in control signals 7. The manufacturing system may melt the powder at the respective exposure points 4 by guiding the beam of the laser device 12 to the exposure points 4.

in a step S3, the sensor device 11 of the additive manufacturing system 1 may record a melt pool parameter value of the melt pool, generated at the respective exposure point 4. The sensor device 11 may provide the melt pool parameter value to the control device 2 in a respective input signal.

The control unit 3 may receive the input signal at an input port 9 of the control device 2 in a step S4. The control unit 3 may record the melt pool parameter values. The control unit 3 may analyse the melt pool parameter values.

In a step S5, the control unit 3 may prove a fulfilment of a predefined condition related to one or more of the melt pool parameter values. In case of a fulfilment of the predefined condition, the control unit 3 may delay a transmission of the respective control signal to the additive manufacturing system 1, comprising a respective one of the commands. As an example, the control unit 3 may record the melt pool parameter values recorded for the exposure points 4 of a preceding layer 5.

If the melt pool parameter values within a predefined region 14 of the preceding layer 5 satisfiy the condition, the control unit 3 may delay the provision of commands in a step S6 to introduce pauses between exposure points 4 within the respective region 14 of the current layer 5 to prevent an overheating.

Conditional delays are inserted into the command list that is executed during the exposure from the scanner controller. This realtime scanner controller provides clock cycles of 100 kHz typically and sends the entries of the exposure command list (mark, jump, set laser power etc.) to the connected hardware (scanner, laser). To enable the high rate realtime operation, the command list is typically filled in advance and executed by the scanner controller autarkic, i.e. without assistance of the connected machine central computer (typ. IPC) .

Some scanner controllers (e.g. Scanlab RTC5, RTC6) offer the option to execute commands conditionally depending on bit-masks read from a 16bit digital input port, which can be used to introduce conditional delays. In the simplest form the digital input signal can be the AD-converted signal readout from the meltpool-monitoring sensor. A more complex but also more advantageous variant uses preprocessing of the sensor raw signal by e.g. filtering and rescaling using a realtime hardware (e.g. FPGA).

To compensate for more systematic issues (e.g. non-optimum choice of laser parameters in overhang regions) a solution using a layer-to-layer feedback for adaptive delay configuration can be used. This solution does not require high rate feedback but analyzes the Meltpool-Monitoring data of a whole exposed layer and calculates a bit pattern that introduces delays for vector groups that are found to be (at least partly) overheated to be used in the next or after next layers. For this to work, the vectors are to be grouped e.g., by position or according to the expected criticality and the vectors of each group use a dedicated comparison bit pattern to evaluate the condition for delay execution.

Using conditional jumps in regions that are expected to be prone to overheating, delays can be executed depending on the state of the digital input port, i.e. on the value of Meltpool-Monitoring signal. This can be done by conditional execution of a single delay command or by the execution of a subroutine that could even use several conditional jumps to execute a delay with the delaytime depending on the input port bit pattern. The comparison value for the evaluation of the condition can be appropriately set by the build preparation software to use thresholds that depend e.g. on quality requirements or known lateral inhomogeneity of the Meltpool-Monitoring-signal.

In contrast to methods that use adopted settings in the tool-path generation (i.e. tuned BP-settings, Sampa analysis and correction) the method according to the invention addresses systematic and stochastic issues.

In contrast to the power tuning methods, the acceptance of a feedback loop that does not touch laser settings or hatch pattern is expected to be higher, since qualified process (laser) parameters remain unchanged. Further, a false positive (i.e. false detection of an non-existing overheating) will only lead to an unnecessary delay in the ms-range, but not detune the laser power to a potentially critical low value.

The invention circumvents the issue that commercial LPBF machines do not allow to modify the job data of a running process. Using the approach described above, the job data does not need to be modified during job execution, i.e. the whole job data handling and execution algorithms in the machine firmware can remain unchanged.

Lastly, the need for potentially expensive realtime hardware is minimized (exception: data preprocessing hardware if required), as the feedback is executed on the scanner controller hardware.

### Reference signs

- 1: additive manufacturing system
- 2: control device
- 3: control unit
- 4: exposure point
- 5: layer
- 6: workpiece
- 7: control signals
- 8: output port
- 9: input port
- 10: input signals
- 11: sensor device
- 12: laser device
- 13: exposure vector
- 14: region
- 15: command sequence

## Claims

1. Method to operate an additive manufacturing system (1), comprising a control device (2), comprising the following steps performed by a control unit (3) of the control device (2) of:
- reading a sequence of commands comprising commands to be provided to the additive manufacturing device for melting powder along a sequence of exposure spots within a layer (5) of the workpiece (6);
- sequentially providing the commands of the command sequence (15) in control signals (7) at an output port (8) of the control device (2) connected to the additive manufacturing device;
- receiving at an input port (9) of the control device (2) input signals (10), comprising a meltpool parameter value of a respective melting spot, sensed by a sensor device (11) of the additive manufacturing device;
**characterised in that**
the method comprises the following steps performed by the control unit (3) of the control device (2):
- delaying the provision of a predefined command of the commands at the output port (8) with a respective predefined delay time as a function of one or more of the meltpool parameter values to set a respective delay between two adjacent of the exposure points (4).

2. The method according to claim 1, wherein the delay is set before a first exposure point (4) of an exposure vector (13).

3. The method according to claim 1 or 2, wherein the delay is set between adjacent exposure points (4) within a same exposure vector (13).

4. The method according to any one of the preceding claims, wherein the respective delay is set in all exposure vectors (13) of a selected vector group of adjacent exposure vectors (13) .

5. The method according to any one of the preceding claims, wherein the respective delay is set as a function of one or more meltpool parameter values of respective exposure points (4) of a preceding exposure vector (13).

6. The method according to any one of the preceding claims, wherein the respective delay is set as a function of one or more meltpool parameter values of respective exposure points (4) of a region (14) of a preceeding layer (5).

7. Additive manufacturing system (1) comprising a control device (2), wherein the control device (2) comprises a control unit (3) configured to
- read a sequence of commands comprising commands to be provided to the additive manufacturing device for melting powder along a sequence of exposure spots within a layer (5) of the workpiece (6);
- sequentially provide the commands of the command sequence (15) in control signals (7) at an output port (8) of the control device (2) connected to the additive manufacturing device;
- receive at an input port (9) of the control device (2) input signals (10), comprising a meltpool parameter value of a respective melting spot, sensed by a sensor device (11) of the additive manufacturing device;
**characterised in that**
the control device (2) is configured to delaying the provision of a predefined command of the commands at the output port (8) with a respective predefined delay time as a function of one or more of the meltpool parameter values to set a respective delay between two adjacent of the exposure points (4) .

8. Control device (2), comprising a control unit (3) configured to
- read a sequence of commands comprising commands to be provided to the additive manufacturing device for melting powder along a sequence of exposure spots within a layer (5) of the workpiece (6);
- sequentially provide the commands of the command sequence (15) in control signals (7) at an output port (8) of the control device (2) connected to the additive manufacturing device;
- receive at an input port (9) of the control device (2) input signals (10), comprising a meltpool parameter value of a respective melting spot, sensed by a sensor device (11) of the additive manufacturing device;
**characterised in that**
the control device (2) is configured to delaying the provision of a predefined command of the commands at the output port (8) with a respective predefined delay time as a function of one or more of the meltpool parameter values to set a respective delay between two adjacent of the exposure points (4) .

9. Computer program which is directly loadable into a memory of a computing device, comprising program means for executing the steps of the method according to any of claims 1 to 6 when the program is executed in the electronic computing device.

10. Storage medium having electronically readable control information stored on it comprising at least one computer program according to claim 10 and configured to perform a method according to one of the claims 1 to 6 when the storage medium is used in a computing device.
